(19) Europäisches Patentamt
European Patent Office
Office européen des brevets

(11) Publication number: 0 105 740 B1

(12) EUROPEAN PATENT SPECIFICATION

(45) Date of publication of patent specification: 23.12.87

(51) Int. Cl.[4]: F 16 D 69/02, C 07 F 5/04

(21) Application number: 83305924.9

(22) Date of filing: 29.09.83

# (54) Boramide coatings for friction materials.

(30) Priority: 30.09.82 US 430183

(43) Date of publication of application:
18.04.84 Bulletin 84/16

(45) Publication of the grant of the patent:
23.12.87 Bulletin 87/52

(84) Designated Contracting States:
DE FR GB

(56) References cited:
US-A-4 022 713

PATENTS ABSTRACTS OF JAPAN, vol. 7, no. 173(M-232)(1318), 30th July 1983

(73) Proprietor: FORD MOTOR COMPANY LIMITED
Eagle Way
Brentwood Essex CM13 3BW (GB)
(84) GB

(73) Proprietor: FORD-WERKE AKTIENGESELLSCHAFT
Ottoplatz 2 Postfach 21 03 69
D-5000 Köln 21 (DE)
(84) DE

(73) Proprietor: FORD FRANCE SOCIETE ANONYME
344 Avenue Napoléon Bonaparte B.P. 307
F-92506 Rueil Malmaison Cedex (FR)
(84) FR

(72) Inventor: Weintraub, Marvin Harris
5743 Kingsfield Drive
West Bloomfield Michigan 48033 (US)
Inventor: Melotik, Donald Joseph
27115 Northmore Drive
Dearborn Heighs Michigan 48127 (US)
Inventor: Anderson, Arnold Eric
11314 Mayfield
Livonia Michigan 48150 (US)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 105 740 B1

(74) Representative: **Drakeford, Robert William et al**
**Ford Motor Company Limited 15/448, Research & Engineering Centre Laindon**
**Basildon Essex SS15 6EE (GB)**

**Description**

Technical field

The method of this invention relates to the use of alkanolamide borates as coatings for friction materials which during use, contact rustable metals. More particularly, the friction material is contacted with an aqueous solution comprising at least about 0.05 weight percent, based on the weight of the solution, alkanolamide borates and subsequently dried to remove water, leaving a coating comprising alkanolamide borates on the friction material.

Background art

During use, friction materials, such as brake lining or clutch facings, come in contact with metals, e.g., cast iron. Corrosion of such ferrous metals may cause adhesion (stiction) of the friction material to the metal when they are allowed to contact one another for a period of time. Generally, such corrosion and stiction occur before the metal and friction material have received substantial sustained wear. One longstanding approach to preventing clutch facing stiction comprises coating the friction material with sodium nitrite. However, recent and anticipated agency recommendations have created a need to replace sodium nitrite which is ecologically less than desirable. It also does not appear to retain its corrosion resistant properties longer than a few weeks (often before the friction material is operating on the vehicle), oxidizing at ambient temperatures to the nitrate. However, we have found that coatings comprising alkanolamide borates on friction materials are significantly more effective in preventing such corrosion bonding and that they maintain these properties after application and during friction material use for a substantially greater period of time.

Alkanolamide borates have been used as flame retardants in cotton batting, however more usually as corrosion inhibitors and lubricants in cutting fluids. U.S. Patent 4,022,713 to Waldstein teaches a composition comprising a liquid carrier constituting water and an alkanolamide borate, which is the reaction product of boric acid and a primary $C_1$—$C_3$ alkanolamine, useful as a corrosion inhibitor in making cutting fluids.

Disclosure of the invention

The invention is directed to a method for using alkanolamide borates as a coating for friction materials which during use contact rustable metals. The coating on the friction material acts to prevent corrosion or corrosion product build up on the metal contacting the friction material. The method of this application comprises:

(A) contacting the friction material with an aqueous solution comprising at least about 0.05, preferably, between about 0.1 and about 10.0, most preferably between about 0.2 and about 5.0 weight percent, based on the weight of the solution, of alkanolamide borates, and

(B) evaporating water from aqueous coating on the friction material so as to leave the friction material with a coating comprising alkanolamide borates.

The alkanolamide borates are selected from the group of compounds having the formula:

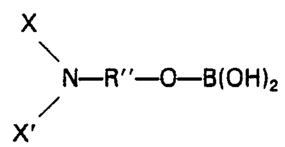

wherein X and X′ are each selected from any of H, R—OH or R′—O—$B(OH)_2$, and wherein R, R′, and R″ are each selected from any $C_1$—$C_5$ aliphatic group. Preferably, X and X′ of said formula are selected from any of R—OH or R′—O—$B(OH)_2$, wherein, on the average, greater than about 50% of X and X′ of the formula are R′—O—$B(OH)_2$. More preferably, X is H, and X′ is selected from any of R—OH or R′—O—$B(OH)_2$, wherein on the average greater than 50% of X′ of the formula is R′—O—$B(OH)_2$. Most preferably, additionally R, R′, and R″ are ethyl groups.

The invention is also directed to friction materials coated according to the method disclosed above.

Advantageously, the borates can be applied to the friction material at very low concentrations and provide superior prevention of such corrosion related phenomena as stiction.

The alkanolamide borates of this invention also exhibit excellent compatibility with dust suppressants commonly employed for use with friction materials.

Best mode for carrying out the invention

The method of this invention can be used with any friction material. In general, friction materials contain a matrix of binder, such as thermosetting resin or vulcanized rubber, a fibrous reinforcement, and friction modifiers. Commonly employed fibers include asbestos, glass and steel wool while metals, metal oxides, cashew and rubber particles are often employed as friction modifiers. Fillers or extenders may be included to modify physical characteristics and reduce cost.

The method of the present invention is directed to coating any friction material which during use

contacts, at least for a time rustable metals. The corrosion of such metals may result, for example, from exposure to salt water, high humidity, etc. One such embodiment, which was mentioned above, comprises coating clutch facing materials in order to prevent stiction which may occur when the clutch facing rests against the clutch pressure plate or engine flywheel, particularly as mentioned above, at a time before the friction material and metal have received sustained wear. It appears that with sustained wear, surface cahracteristics of the friction material and the metal are modified so as to significantly decrease the likelihood of stiction occurring. Another embodiment of the mlethod of the present invention comprises providing a coating comprising alkanolamide borates on brake linings, for example, to prevent corrosion build up (also known as rust-jacking) on the portion of the shoe adjacent to the lining. Other applications of the method of this invention to prevent corrosion would be apparent to those skilled in the art.

The inhibitor ester compounds employed in the method of this application, i.e., the alkanolamide borates are selected from the group consisting of compounds having the formula:

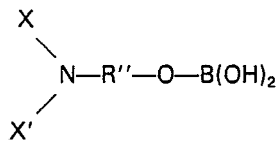

wherein X and X' are each selected from any of H, R—OH or R'—O—$B(OH)_2$, and wherein R, R' and R'' are each selected from any $C_1$—$C_5$ aliphatic group. Preferably, the alkanolamide borate is a tri- or (more preferably) a dialkanolamide borate, i.e., wherein, X and X' of the formula are selected from any of R—OH or R'—O—$B(OH)_2$, wherein, on the average, greater than 50% of X and X' of the formula are R'—O—$B(OH)_2$, or more preferably, wherein X is H and X' of the formula is selected from any of R—OH or R'—O—$B(OH)_2$, and wherein on the average, greater than about 50% of X' of the formula is R'—O—$B(OH)_2$. Most preferably, additionally R, R' and R'' are ethyl groups. Most preferably, the alkanolamide borate is a dialkanolamide borate having the formula:

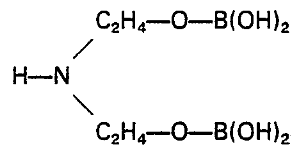

(1)

or

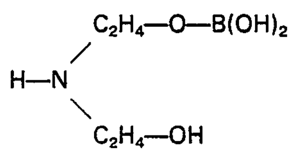

(II)

wherein at least about 50 percent of the dialkanolamide borate component comprises the borate or formula (I).

It is to be noted that in the most general embodiment of the alkanolamide, R, R' and R'' can be the same or different $C_1$—$C_5$ aliphatic groups. As would be apparent to one skilled in the art, mixtures of suitable alkanolamide borates, preferably mixtures of di- and trialkanolamide borates, could also be used in the method of the subject invention.

The aqueous solution of the alkanolamide borate comprises at least about 0.05, preferably between about 0.1 and about 10.0, most preferably between about 0.2 and about 5.0 weight percent borate. In embodiments of the subject invention wherein, for example, clutch facings are coated to prevent stiction, it is generally preferable to employ aqueous solutions comprising between about 0.1 and about 5.0, more preferably between about 0.2 and about 2.0 weight percent borate, based on the weight of the solution. It has been found that for such applications, concentrations that give a reactive borate concentration of about 1—10 $gms/m^2$ are particularly useful. However, in coating brake friction materials so as to prevent corrosion build up on the attached metal (i.e., to eliminate rust-jacking), it is preferable to employ an aqueous solution comprising between about 5.0 and 10.0 weight percent alkanolamide borate, based on the weight of the aqueous solution. As would be apparent to one skilled in the art, optimal concentration of the boramide solution to be employed would depend, in part, on the particular intended use of the coating, as well as application techniques, etc. Selection of optimal solution coating concentration would be within the skill of those in the art.

Representative of the various alkanolamide borates falling within the above formula are, for example, those commercially available from Keil Chemical Division, Ferro Corp., (Hammond, Indiana) under the tradename Synkad-202 or from Mazer Chemical Industries (Gurnee Illinois), as a concentrate of the borate in water generally comprising about 20—95 weight percent borate. The concentrate may be suitably diluted for use in the method of the invention of this application.

The aqueous solution containing the alkanolamide borates of this method may also include other materials conventionally employed in such coating. These may include wetting agents, e.g., non-ionics or organic phosphate esters, dyes, and antioxidants, e.g., amines, which additives are generally employed at up to about 1 weight percent, based on solution weight. Other materials such as dust suppressants, e.g., acrylates, sodium silicates or polyvinyl alcohol (PVA) may be included, generally in amounts up to about 15 weight percent, based on solution weight. While the dust suppressant may be included in the aqueous borate solution, the dust suppressant may also be employed as a separate coating composition to be employed before, however preferably alter, coating of the friction material with the aqueous solution comprising the alkanolamide borate. It has also been found preferable, when employing separate coatings (two step) of a dust suppressant solution and a borate solution, to subject the friction material to the dust suppressant coating solution for a shorter period of time than that of the borate solution coating during respective coating applications thereof.

The aqueous solution comprising the alkanolamide borate may be applied as a coating to the friction material by any known method such as spraying, flow coating, roll coating or immersion or like techniques. Selection of optimal coating technique would be well within the skill of those in the art, and depends, for example, on friction material size, porosity processing parameters, etc. The coating may be applied so as to be adsorbed on and absorbed into the friction material in any desired amount. Penetration (absortion) of the coating into the friction material to between about 0.5—1.0 mm of depth for clutch facings, for example, has been found suitable to prevent stiction. Coatings applied, on the other hand, to prevent rust-jacking are generally suitably applied to lower penetration depths. Penetration into the friction material would depend, in part, on the physical properties of the friction materials, including its porosity, a condition of manufacture (e.g., molding conditions).

After coating the friction material according to the method of this invention, water is allowed to evaporate from the aqueous coating on the friction material so as to leave a coating of alkanolamide borate on the friction material. This may be done by drying the friction material at ambient temperatures or at elevated temperatures, or by a combination of both ambient and elevated temperature drying operations. While it is preferable to allow evaporation of essentially all of the water present in the aqueous coating on the friction material, it is not necessary to do so. The optimal amount of water to be evaporated would depend on intended application, processing conditions, etc., of the coated friction material and thus selection of this optimal amount of water to be removed would be within the skill of those in the art.

These alkanolamide borates may be prepared by reacting a mixture of (ortho) boric acid ($H_3BO_3$) and alkanolamide under conditions so as to esterify at least some of hydroxyl groups present on the alkanol moiety with the boric acid. The alkanolamine employed in the esterification may be a mono-, di-, trialkanolamine or suitable mixtures thereof, wherein the alkanol moiety is a $C_1$—$C_5$ aliphatic group which may be unsubstituted or substituted with non-interfering functionality. Preferably, the alkanolamine is a di- or trialkanolamine or suitable mixtures thereof. Typical alkanol moieties include but are not limited to, ethanol, 1-isopropanol, 2-amino-2-methyl propanol and butanol, with ethanol being most preferred.

Waldstein, in U.S. Patent 4,022,713, teaches a method for making monoalkanolamide borates, by reaction of suitable monoalkanolamines and boric acid at mildly elevated temperatures, which patent is hereby incorporated by reference for these teachings. In the esterification reaction, the water formed may be removed by means of a reflux condenser or solvent extraction. Any excess of unreacted alkanolamine can be left in the reaction product (the alkanolamide borate) inasmuch as it does not interfere with the rust inhibiting action of the borate product. Excess boric acid may be neutralized with bases, such as sodium hydroxide, to maintain desired pH.

The reaction conditions described above are merely meant as exemplary or one such formulation, and are not meant to be limiting to the method of this invention.

The following examples are presented by way of description of the process of the invention and set forth the best mode contemplated by the inventors but are not to be construed as limiting.

Example 1

A 1.0% by weight solution of Keil Synkad 202 (approximately 30% by weight alkanolamide borate) is prepared by adding 10 grams of the material to 990 g of water.

25 mm square samples of Beral K208-1 142K-81, a non-asbestos clutch friction material, are then coated utilizing the following process cycle:

Cycle I

1.0% by weight Keil Synkad 202—0.3 minute immersion ambient temperature
Air dry approximately 15 minutes at ambient temperature
Oven dry 30 minutes at 135°C

The samples are evaluated for stiction using a rust adhesion test procedure developed at Ford Motor Company Scientific Research Laboratories.

The test procedure is as follows:

25 mm square clutch facing samples are clamped (35—50 lbs pressure) into 1.0 ml pools of a 5% by

weight aqueous sodium chloride (NaCl) solution on a precleaned cast iron test plate (the salt solution is delivered by syringe).

The entire assembly is sealed in a polyethylene bag with an open breaker containing approximately 100 ml of a 5.0% by NaCl solution and left overnight (16 hours). The assembly is carefully removed from the bag and gently dried at cast iron temperatures at or below 43°C until dry (approximately 2 hours at 43°C, 4 hours at 27°C). Care is taken to avoid thermally or mechanically shocking the assembly. The clamps are cautiously removed to avoid disturbing the samples.

Shear stress measurements are taken utilizing a force gage (compression type, 500 N capacity, in 5 N or smaller increments). These measurements are made by placing the push rod which is attached to the force gauge against a side of the friction material. Force is applied until lateral displacement of the test sample occurs along the test plate. This force is recorded in N. Stiction Shear Stress Values (S.S.S.) are subsequently determined in Pa for the samples.

Beral K 208-1 142K-81 from Cycle I tested utilizing the aforementioned procedure has average stiction shear stress (S.S.S.) values of 14 kPa. Untreated samples exhibit average S.S.S. values of 56 kPa. Note: Test Plate Cleaning Procedure

The cast iron plate is cleaned by low speed sanding with 150 grit, followed by 320 grit abrasives. It is then wiped clean with anhydrous alcohol (ethanol), then acetone, and air dried.

Example 2

25 mm square Nuturn FB-2 NAFC 18 non-asbestos clutch friction material samples are treated according to the following cycle:

Cycle II

Keil Synkad 202—1.0 weight percent 60 second immersion ambient temperature
Air Dry approximately 15 minutes at ambient temperature
Oven Dry 25 minutes at 103°C

Utilizing the rust adhesion test procedure described in Example 1, average stiction shear stress (S.S.S.) values of 24 kPa are obtained for the treated samples. Samples similarly prepared and tested, except utilizing the Keil Synkad 202 concentrations of 0.1% and 0.5 wt.%, have average S.S.S. values of 35 kPa and 42 kPa, respectively.

Untreated Nuturn FB-2 NAFC 18 samples have average S.S.S. values of 280 kPa.

Example 3

25 mm square samples of Raybestos Manhattan (R—M) US M 969X, an asbestos bearing clutch friction material are treated and tested as in Example 1.

The average S.S.S. values are 21 kPa for the above samples. Untreated R—M US M969X samples are similarly tested and have average S.S.S. values of 98 kPa.

Example 4

(a) Utilizing a two step coating process, an alkanolamide borate corrosion inhibitor solution and a sodium silicate (water glass) dust suppressant solution are applied to 25 mm square R—M US 969X clutch friction material samples by the process described below:

Cycle III

Keil Synkad 202 1.0 weight percent 60 second immersion ambient temperature
Air Dry approximately 10 minutes at ambient temperature
Oven Dry 25 minutes at 105°C
Air Cool—15 minutes at ambient temperature
Sodium Silicate 40—42° Baume—10% by volume 30 second immersion ambient temperature
Air Dry approximately 10 minutes

Oven Dry 25 minutes at 105°C.

Sodium silicate solution was prepared by adding 40 ml 40—42° Baume sodium silicate (available from M.C.B. Manufacturing Chemists Corp., Cincinnatti, Ohio) (2–5% by weight) to 360 ml of water. After testing as described in Example 1, the average S.S.S. values for the above samples is 17 kPa.

(b) A single solution (Solution II) was utilized which comprised the dust suppressant and corrosion inhibitor used in Example 4A.

Solution II was prepared by adding 40.0 ml 40—42° Baume sodium silicate (~5.0 wt.%) and 4.0 ml Synkad 202 (~1.0 wt.%) to 356 ml water.

1° square samples of R—M US 969X clutch friction material are treated according to the following cycle:

Cycle IV

Solution II—60 second immersion ambient temperature
Air Dry—10 minutes at ambient temperature
Oven Dry—25 minutes at 105°C

The clutch samples are then treated as in Example 1. The average S.S.S. values are 10 kPa. Untreated R—M US 969X samples have average S.S.S. values of 98 kPa.

Example 5

25 mm square samples of Thermoid 219 X 146 CL 6TL 7549C ANF clutch friction material are treated with known corrosion inhibitors utilizing the following cycle:

Cycle V

Corrosion inhibitor—30 sec. immersion ambient temperature
Oven Dry—10 minutes at 100°C

The corrosion inhibitors utilized along with the average S.S.S. values observed during testing are listed below. When the corrosion inhibitor was:

sodium tetraborate decahydrate 10% by wt. aqueous solution, average S.S.S. values were 77 kPa
sodium nitrite aqueous solutions of 5% and 15% by wt. average S.S.S. values were 85 and 125 kPa, respectively

Example 6

Thiokol 1959 4715 and Bendix 7161A semimetallic disc brake friction materials were treated using the following cycle.

Keil Synkad 202—1% by weight 30 second immersion ambient temperature
Air Dry—10 minutes
Oven Dry—25 minutes at 100°C.

The pads were then riveted to cold rolled steel brake shoes and corrosion tested (modified Ford Arizona Proving Ground Test) in a humidity cabinet with periodic application of 5.0 wt.% aqueous sodium chloride solution to the friction material/shoe interface.

The brake shoe assemblies were afforded excellent corrosion protection at the interface, after 5 weeks accelerated testing.

In view of this disclosure, many modifications of this invention will be apparent to those skilled in the art. It is intended that all such modifications which fall within the true scope of this invention be included within the terms of the appended claims.

**Claims**

1. A method for using alkanolamide borates as a coating for friction materials which during use contact rustable metals, which method comprises:

(A) contacting said friction material with an aqueous solution comprising at least about 0.05 weight percent said alkanolamide borate selected from the group consisting of compounds having the formula:

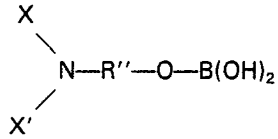

wherein X and X′ are each selected from any of H, R—OH or R′—O—$B(OH)_2$, and wherein R, R′, and R″ are each selected from any $C_1$—$C_5$ alkyl group; and

(B) evaporating water from the aqueous coating on said friction material so as to leave said friction material with a coating comprising said alkanolamide borates.

2. A method according to claim 1, wherein said aqueous solution comprises between about 0.1 and about 10.0 weight percent said alkanolamide borate.

3. A method according to claim 1, wherein said aqueous solution comprises between about 0.2 and about 5.0 weight percent said alkanolamide borate.

4. A method according to claim 1, wherein X of said formula is H and X′ is selected from any of R—OH or R′—O—$B(OH)_2$, and wherein, on the average, greater than 50% of X′ of said formula is R′—O—$B(OH)_2$.

5. A method according to claim 1, wherein X and X′ of said formula are selected from any of R—OH or

R'—O—B(OH)$_2$, and wherein, on the average, greater than about 50% of X and X' of said formula are R'—O—B(OH)$_2$.

6. A method according to claim 4 or 5, wherein in said formula R, R' and R'' are ethyl groups.

7. A method according to claim 1, wherein said aqueous solution further comprises up to about 15 weight percent dust suppressants based on the weight of said aqueous solution.

8. A method according to claim 1, wherein said method further comprises coating said friction material with a dust suppressant composition.

9. A method according to claim 1, wherein said friction materials are selected from clutch facings and brake friction materials.

10. A method according to claim 9, wherein said friction material is a clutch facing which is coated with said solution comprising alkanolamide borates to a depth of between about 0.5 and about 1.0 mm.

11. A friction material having a coating comprising alkanolamide borates selected from the group consisting of compounds having the formula:

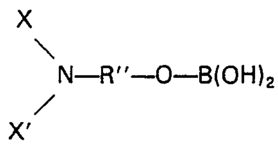

wherein X and X' are each selected from any of H, R—OH, or R'—O—B(OH)$_2$, and wherein R, R' and R'' are each selected from any $C_1$—$C_5$ alkyl group.

12. A friction material according to claim 10, wherein said alkanolamide borates are applied to said friction material in an aqueous solution comprising greater than about 0.05 weight percent alkanolamide borates based on the weight of said aqueous solution.

13. A friction material according to claim 11, wherein X of said formula is H and X' is selected from any of R—OH or R'—O—B(OH)$_2$ and wherein, on the average, greater than 50% of X' of said formula is R'—O—B(OH)$_2$.

14. A friction material according to claim 11, wherein X and X' of said formula are selected from any of R—OH or R'—O—B(OH)$_2$, and wherein, on the average, greater than about 50% of X and X' of said formula are R'—O—B(OH)$_2$.

15. A friction material according to claim 13 or 14 wherein, R, R' and R'' of said formula are ethyl groups.

16. A friction material according to claim 11, wherein said friction materials are selected from clutch facings and brake friction material.

17. A friction material according to claim 16, wherein said friction material is a clutch facing which has been coated with said alkanolamide borates to a depth of between about 0.5 and about 1.0 mm.

18. A friction material according to claim 1 or 16, wherein said coating on said friction material further comprises dust suppressants.

**Patentansprüche**

1. Verfahren zur Verwendung von Alkanolamidboraten als Beschichtung für Reibungsmaterialien, die im Gebrauch mit rostenden Metallen in Berührung kommen, dadurch gekennzeichnet,

(A) dass man dieses Reibungsmaterial mit einer wässrigen Lösung in Berührung bringt, die mindestens etwa 0,05 Gewichtsprozent eines solchen Alkanolamidborats, ausgewählt aus der Verbindungen der Formel

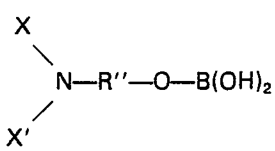

worin X und X' je beliebig unter H, R—OH oder R'—O—B(OH)$_2$ sowie R, R' und R'' je beliebig unter $C_1$—$C_5$-Alkylgruppen ausgewählt sind, umfassenden Gruppe enthält, und

(B) Wasser aus der wässrigen Beschichtung auf jedem Reibungsmaterial verdunsten lässt, so dass dieses Reibungsmaterial mit einer aus solchen Alkanolamidboraten bestehenden Beschichtung verbleibt.

2. Verfahren nach Anspruch 1, worin diese wässrige Lösung zwischen etwa 0,1 und etwa 10,0 Gewichtsprozent solches Alkanolamidborat enthält.

3. Verfahren nach Anspruch 1, worin diese wässrige Lösung zwischen etwa 0,2 und etwa 5,0 Gewichtsprozent solches Alkanolamidborat enthält.

4. Verfahren nach Anspruch 1, worin X in jener Formel für H steht und X' beliebig unter R—OH oder R'—O—B(OH)$_2$ ausgewählt ist und durchschnittlich mehr als 50% von X' in jener Formel R'—O—B(OH)$_2$ darstellt.

5. Verfahren nach Anspruch 1, worin X und X' in jener Formel beliebig unter R—OH oder R'—O—$B(OH)_2$ ausgewählt sind und durchschnittlich mehr als etwa 50% von X und X' in jener Formel R'—O—$B(OH)_2$ darstellen.

6. Verfahren nach Anspruch 4 oder 5, worin R, R' und R'' in jener Formel für Äthylgruppen stehen.

7. Verfahren nach Anspruch 1, worin diese wässrige Lösung ferner bis etwa 15 Gewichtsprozent Entstaubungsmittel, bezogen auf das Gewicht dieser wässrigen Lösung, enthält.

8. Verfahren nach Anspruch 1, bei dem man ferner die ses Reibungsmaterial mit einer Entstaubungsmasse beschichtet.

9. Verfahren nach Anspruch 1, worin diese Reibungsmaterialien unter Kupplungsbelägen und Bremsbelagmaterialien ausgewählt sind.

10. Verfahren nach Anspruch 9, worin als Reibungsmaterial ein Kupplungsbelag vorliegt, der mit jener Alkanolamidborate enthaltenden Lösung auf eine Tiefe zwischen etwa 0,5 und etwa 1,0 mm beschichtet ist.

11. Reibungsmaterial mit einer Beschichtung, die Alkanolamidborate aus der Verbindungen der Formel

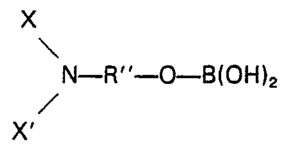

worin X und X' je beliebig unter H, R—OH oder R'—O—$B(OH)_2$ sowie R, R' und R'' je beliebig unter $C_1$—$C_5$-Alkylgruppen ausgewählt sind, umfassenden Gruppe enthält.

12. Reibungsmaterial nach Anspruch 11, worin jene Alkanolamidborate auf dieses Reibungsmaterial in wässriger Lösung, die mehr als 0,05 Gewichtsprozent Alkanolamidborate, bezogen auf das Gewicht dieser wässrigen Lösung, enthält, aufgebracht sind.

13. Reibungsmaterial nach Anspruch 11, worin X in jener Formel für H steht und X' beliebig unter R—OH oder R'—O—$B(OH)_2$ ausgewählt ist und durchschnittlich mehr als 50% von X' in jener Formel R'—O—$B(OH)_2$ darstellt.

14. Reibungsmaterial nach Anspruch 11, worin X und X' in jener Formel beliebig unter R—OH oder R'—O—$B(OH)_2$ ausgewählt sind und durchschnittlich mehr als 50% von X und X' in jener Formel R—O—$B(OH)_2$ darstellen.

15. Reibungsmaterial nach Anspruch 13 oder 14, worin R, R' und R'' in jener Formel für Äthylgruppen stehen.

16. Reibungsmaterial nach Anspruch 11, welches unter Kupplungsbelägen und Bremsbelagmaterialien ausgewählt ist.

17. Reibungsmaterial nach Anspruch 16, welches als Kupplungsbelag vorliegt, der mit jenen Alkanolamidboraten auf eine Tiefe zwischen etwa 0,5 und etwa 1,0 mm beschichtet ist.

18. Reibungsmaterial nach Anspruch 11 oder 16, worin jene Beschichtung auf diesem Reibungsmaterial ferner Entstaubungsmittel enthält.

**Revendications**

1. Un procédé pour l'emploi de borates d'alcanolamides en tant que revêtements pour matériaux de friction qui, lors de leur emploi, viennent au contact de métaux sensibles à la rouille, procédé qui comprend les étapes suivantes:

(A) la mise en contact dudit matériau de friction avec une solution aqueuse comprenant au moins environ 0,05 pour cent en poids dudit borate d'alcanolamide choisi pari le groupe constitué par les composés ayant la formule:

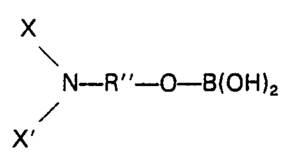

dans laquelle X et X' sont tous deux choisis parmi l'un quelconque de H, R—OH, ou R'—O—$B(OH)_2$, et dans laquelle R, R', et R'' sont tous chiosis parmi l'un quelconque des groupes alkyles en $C_1$—C-t085; et

(B) l'évaporation de l'eau à partir du revêtement aqueux sur ledit matériau de friction de façon à laisser ledit matériau de friction muni d'un revêtement comprenant lesdits borates d'alcanolamides.

2. Un procédé selon la revendication 1, dans lequel ladite solution aqueuse comprend d'environ 0,1 à environ 10,0 pour cent en poids dudit borate d'alcanolamide.

3. Un procédé selon la revendication 1, dans lequel ladite solution aqueuse comprend d'environ 0,2 à environ 5,0 pour cent en poids dudit borate d'alcanolamide.

4. Un procédé selon la revendication 1, dans lequel le X de ladite formule est H et le X' est choisi parmi l'un quelconque de R—OH ou R'—O—B(OH)$_2$, et dans lequel, en moyenne, plus de 50% des X' de ladite formule sont R'—O—B(OH)$_2$.

5. Un procédé selon la revendication 1, dans lequel le X et le X' de ladite formule sont choisis parmi l'un quelconque de R—OH ou R'—O—B(OH)$_2$, et dans lequel, en moyenne, plus d'environ 50% des X et X' de ladite formule sont R'—O—B(OH)$_2$.

6. Un procédé selon la revendication 4 ou la revendication 5, dans lequel R, R' et R'' sont des groupes éthyles dans ladite formule.

7. Un procédé selon la revendication 1, dans lequel ladite solution aqueuse comprend en outre jusqu'à environ 15 pour cent en poids de dépoussiéreurs par rapport au poids de ladite solution aqueuse.

8. Un procédé selon la revendication 1, dans lequel ledit procédé comprend, en outre, le revêtement dudit matériau de friction à l'aide d'une composition de dépoussiéreur.

9. Un procédé selon la revendication 1, dans lequel lesdits matériaux de friction sont choisis parmi les garnitures d'embrayage et les matériaux de friction pour freins.

10. Un procédé selon la revendication 9, dans lequel ledit matériau de friction est une garniture d'embrayage qui est revêtue à l'aide de ladite solution comprenant des borates d'alcanolamides jusqu'à une épaisseur comprise entre environ 0,5 et environ 1,0 mm.

11. Un matériau de friction ayant un revêtement comprenant des borates d'alcanolamides choisis parmi le groupe constitué par les composés ayant la formule:

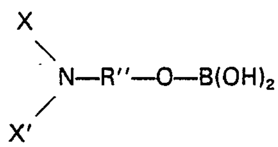

dans laquelle X et X' sont tous deux choisis parmi l'un quelconque de H, R—OH, ou R'—O—B(OH)$_2$, et dans laquelle R, R' et R'' sont tous choisis parmi l'un quelconque des groupes alkyles en $C_1$—$C_5$.

12. Un matériau de friction selon la revendication 10, dans lequel lesdits borates d'alcanolamides sont appliqués audit matériau de friction dans une solution aqueuse comprenant plus d'environ 0,05 pour cent en poids de borates d'alcanolamides par rapport au poids de ladite solution aqueuse.

13. Un matériau de friction selon la revendication 11, dans lequel le X de ladite formule est H et le X' est choisi parmi l'un quelconque de R—OH ou R'—O—B(OH)$_2$ et dans lequel, en moyenne, plus de 50% des X' de ladite formule sont R'—O—B(OH)$_2$.

14. Un matériau de friction selon la revendication 11, dans lequel les X et X' de ladite formule sont choisis parmi l'un quelconque de R—OH ou R'—O—B(OH)$_2$, et dans lequel, en moyenne, plus d'environ 50% des X et X' de ladite formule sont R'—O—B(OH)$_2$.

15. Un matériau de friction selon la revendication 13 ou la revendication 14, dans lequel les R, R' et R'' de ladite formule sont des groupes éthyles.

16. Un matériau de friction selon la revendication 11, dans lequel lesdits matériaux de friction sont choisis parmi les garnitures d'embrayage et les matériaux de friction pour freins.

17. Un matériau de friction selon la revendication 16, dans lequel ledit matériau de friction est une garniture d'embrayage qui a été revêtue à l'aide desdits borates d'alcanolamides jusqu'à une épaisseur comprise entre environ 0,5 et environ 1,0 mm.

18. Un matériau de friction selon la revendication 1 ou la revendication 16, dans lequel ledit revêtement sur ledit matériau de friction comprend en outre des dépoussiéreurs.